Europäisches Patentamt

European Patent Office

Office européen des brevets

(19)

(11) **EP 0 609 114 B1**

(12) **FASCICULE DE BREVET EUROPEEN**

(45) Date de publication et mention
de la délivrance du brevet:
**06.10.1999 Bulletin 1999/40**

(51) Int Cl.⁶: **H04L 12/56**

(21) Numéro de dépôt: **94400098.3**

(22) Date de dépôt: **14.01.1994**

(54) **Procédé de gestion du débit de messages codés numériquement transportés par un réseau asynchrone, notamment un réseau ATM, et dispositif pour sa mise en oeuvre**

Verfahren und Vorrichtung zur Bitratenverwaltung in ATM-Netzen

Method and device for bit rate management in an ATM network

(84) Etats contractants désignés:
**DE FR GB IT NL SE**

(30) Priorité: **22.01.1993 FR 9300639**

(43) Date de publication de la demande:
**03.08.1994 Bulletin 1994/31**

(73) Titulaire: **THOMSON-CSF**
**75008 Paris (FR)**

(72) Inventeurs:
• **Dumas, Pierre**
**F-92402 Courbevoie Cédex (FR)**
• **Mouen Makoua, David**
**F-92402 Courbevoie Cédex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**EP-A- 0 422 549**

• **IEEE NETWORK Septembre 1992 , NEW YORK, US pages 38 - 49 P.E. BOYER ET AL. 'Spacing Cells Protects and Enhances Utilization of ATM Network Links'**
• **EUROPEAN TRANSACTIONS ON TELECOMMUNICATIONS AND RELATED TECHNOLOGIES vol. 3, no. 2 , Avril 1992 , MILANO IT pages 183 - 193 L. FRATTA ET AL. 'Congestion Control Strategies in ATM Networks'**
• **INTERNATIONAL CONFERENCE ON COMMUNICATIONS vol. 3 , Juin 1991 , NEW YORK, US pages 1258 - 1264 M. DECINA 'Open issues regarding the universal application of ATM for multiplexing and switching in the B-ISDN'**

## Description

La présente invention concerne un procédé de gestion du débit de messages codés numériquement transportés par un réseau asynchrone, notamment un réseau ATM, abréviation anglo-saxonne pour Asynchronous Transfert Mode, et un dispositif pour sa mise en oeuvre.

L'acheminement de la parole, de la musique, des images, du texte ou de données à caractère général a donné naissance à des systèmes de transmissions multi-services.

De plus en plus, les systèmes de télécommunications font appel à une technique connue de transmission asynchrone ATM, qui accepte des informations numériques de natures et de débits aussi variés qu'irréguliers.

L'article "Spacing cells protects and enhances utilization of ATM network Links" de P. Boyer et al., IEEE NETWORK septembre 1992, NEW YORK, pages 38-49, décrit un procédé de gestion du débit de cellules pour les espacer au point d'entrée d'un réseau ATM.

Les trains de données issus des différents services sont découpés en segments de longueur fixe. Un en-tête permettant l'acheminement de données d'un abonné émetteur vers un abonné destinataire est associé à chaque segment appelé également champ de données. Le tout forme une cellule ATM de taille fixe interprétable, selon le contenu de son en-tête, par ce qui est appelé un commutateur ATM.

Des artères de transmissions réalisées à l'aide de câbles, de faisceaux hertziens, de fibres optiques, etc... relient les commutateurs entre eux de façon à former un réseau de télécommunication.

Chaque commutateur dispose d'informations d'acheminement pour aiguiller vers un des commutateurs adjacents les cellules ATM incidentes.

Il est ainsi possible de réaliser un circuit virtuel correspondant à un trajet déterminé par l'en-tête de la cellule à l'intérieur du réseau entre un terminal d'émission, ou source, et un terminal de réception en s'appuyant sur un support physique matérialisé par les artères de transmission. Une artère de transmission peut être commune à plusieurs circuits virtuels. Le commutateur ATM est donc amené à multiplexer des cellules issues de différents services sur la même artère de transmission.

Ce multiplexage requiert l'évaluation du débit utile de l'artère, pouvant prendre des valeurs très différentes selon le service considéré, afin de s'assurer que le débit physique limité par le milieu de transmission, est suffisant.

Cependant, cette évaluation moyennée dans le temps ne tient pas compte du caractère irrégulier de la transmission ATM. Par exemple un service mis en attente pendant un temps donné, peut d'un seul coup émettre une rafale de cellules. Cette pointe de débit peut entraîner un dépassement de la capacité de l'artère ce qui est préjudiciable pour l'intégrité des données de l'ensemble des services multiplexés sur l'artère.

L'invention a pour but de pallier cet inconvénient.

A cet effet, l'invention a pour objet un procédé de gestion du débit de messages codés numériquement transportés par un réseau asynchrone entre au moins un abonné émetteur et un abonné récepteur, consistant, dans une première étape, à segmenter les messages émis par l'abonné émetteur en cellules, dans une deuxième étape, à effectuer un premier traitement sur chacune des cellules pour permettre de les espacer régulièrement d'un écart de temps minimal au moins égal à un temps de résolution déterminé, dans une troisième étape, à effectuer un deuxième traitement succédant au premier, pour permettre d'espacer des groupes de cellules ayant le même débit d'un écart de temps minimal déterminé en fonction du débit alloué à chaque abonné du réseau, et dans une quatrième étape, à émettre les cellules ainsi espacées dans un circuit virtuel déterminé du réseau, caractérisé en ce que dans la deuxième étape le premier traitement des cellules consiste à associer à l'en-tête de chaque cellule un premier champ contenant une information de temps correspondant à l'écart minimal imposé entre deux cellules quelconques consécutives émises dans le réseau, en ce que dans la troisième étape, le deuxième traitement des cellules consiste, après avoir attribué à chaque abonné une file d'attente correspondant à un débit d'émission déterminé dans le circuit virtuel déterminé, à répartir les cellules issues du premier traitement dans les files d'attente en fonction du débit déterminé alloué à chaque cellule, à organiser des groupes de cellules issues des files d'attente en une suite de cellules segmentée en listes, chaque liste comportant le contenu d'une file d'attente non vide et chaque début de liste étant repéré par un indicateur de têtes de liste associé à l'en-tête de la cellule tête de liste, à calculer un écart de temps déterminé séparant l'émission de deux cellules tête de liste consécutives en fonction du temps de résolution, du rang de la liste en traitement, du rang de la liste non vide suivante, du nombre de cellules dans la liste en traitement et de l'écart de temps entre deux cellules consécutives quelconques, à transmettre séquentiellement les listes de cellules à un émetteur de cellules du réseau, et en ce qu'il consiste dans la quatrième étape, à charger dans un premier timer du réseau l'écart de temps séparant l'émission de deux cellules quelconques consécutives associé à l'en-tête de chaque cellule pour effectuer un égrenage global des cellules, à charger dans un deuxième timer succédant au premier l'écart de temps séparant l'émission de deux cellules têtes de liste consécutives pour effectuer un égrenage sélectif des cellules, et à émettre dans le circuit virtuel déterminé du réseau un flux de cellules issues des deux égrenages successifs.

L'invention a également pour objet un dispositif pour la mise en oeuvre du procédé précité.

Elle a d'une part pour avantage de permettre un lissage des pointes de débit d'un circuit virtuel en forçant un écart intercellulaire minimal, et d'autre part de permettre une gestion du débit alloué à un abonné déterminé en fonction de ses besoins en garantissant que l'abonné ne dépasse pas le débit qui lui est alloué, et en évitant tout débordement éventuel de la capacité d'une artère.

L'invention sera mieux comprise et d'autres caractéristiques apparaîtront à l'aide de la description qui suit faite en référence aux figures annexées qui représentent:

- la figure 1, un bloc diagramme des étapes effectuées par le procédé selon l'invention,
- la figure 2, un schéma synoptique du procédé selon l'invention,
- la figure 3, un schéma fonctionnel du procédé selon l'invention,
- la figure 4, un bloc diagramme des étapes effectuées par la troisième étape du procédé selon l'invention,
- la figure 5, un exemple de répartition des cellules,
- la figure 6, un exemple d'organisation en listes des cellules,
- la figure 7, un bloc diagramme des étapes effectuées par la quatrième étape du procédé selon l'invention,
- la figure 8, un schéma fonctionnel de la quatrième étape du procédé selon l'invention,
- la figure 9, un premier chronogramme représentant l'échelonnement dans le temps des cellules après l'égrenage global,
- la figure 10, un deuxième chronogramme représentant l'échelonnement dans le temps des cellules après l'égrenage sélectif,
- la figure 11, un mode de réalisation d'un dispositif pour la mise en oeuvre du procédé selon l'invention,
- la figure 12, un exemple de formatage d'une cellule,
- la figure 13, un organigramme de traitement et
- la figure 14, un diagramme représentant le débit d'une artère ,en fonction du temps.

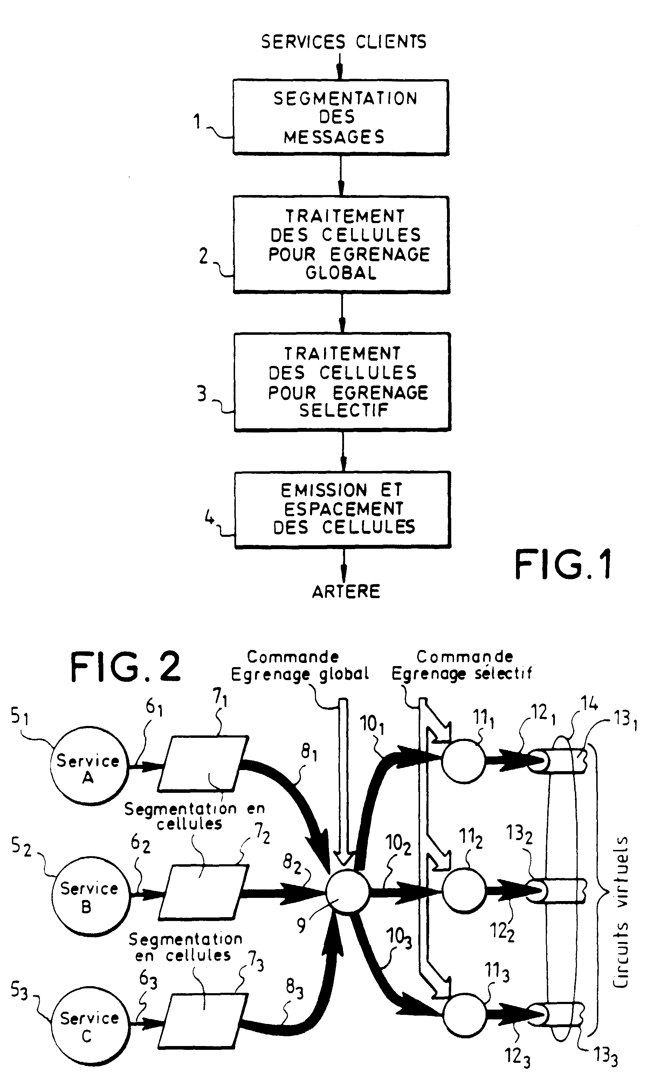

Le procédé selon l'invention comporte quatre étapes principales illustrées par le bloc diagramme de la figure 1.

Il commence dans une première étape 1 par une segmentation des messages livrés par les services clients en cellules ATM. Il se poursuit dans une deuxième étape 2 par un premier traitement des cellules obtenues dans la première étape 1 du procédé pour préparer un premier espacement des cellules et dans une troisième étape 3, par un deuxième traitement des cellules issues du premier traitement pour préparer un deuxième espacement des cellules, et se termine selon une quatrième étape par l'émission des cellules vers une artère déterminée avec des espacements entre cellules fonction du débit alloué à chaque service.

Certaines règles doivent être respectées pour le bon déroulement du procédé selon l'invention:

- les cellules issues d'un même service sont émises les unes après les autres
- les cellules issues de services différents peuvent être multiplexées dans le temps
- le débit en émission des cellules issues d'un service doit s'approcher au mieux du débit alloué à ce service sans jamais le dépasser.

La figure 2 représente un schéma synoptique du procédé selon l'invention.

Sur cette figure, un premier service A, $5_1$, un deuxième service B, $5_2$, et un troisième service C, $5_3$, émettent respectivement un flux de données $6_1$, $6_2$ et $6_3$, sous forme de messages, qui sont injectés respectivement sur l'entrée d'un moyen de segmentation $7_1$, $7_2$ et $7_3$ pour segmenter les messages en cellules. Les flux de données $8_1$, $8_2$ et $8_3$ segmentées en cellules sortant respectivement de chacun des moyens de segmentation $7_1$, $7_2$ et $7_3$ sont canalisés sur une première entrée d'un premier moyen d'espacement des cellules 9 appelé ci-après égrenage global et ou le terme "égrenage" est également connu sous la dénomination anglo-saxonne de "cells spacing", et reçoit sur une deuxième entrée une commande d'égrenage global. A la sortie du premier moyen d'égrenage global 9, des flux de données $10_1$, $10_2$ et $10_3$ sont repartis respectivement vers une première entrée d'un deuxième moyen d'espacement des cellules $11_1$, $11_2$ et $11_3$ appelé ci-après égrenage sélectif. Chaque moyen d'égrenage sélectif $11_1$, $11_2$ et $11_3$ reçoit sur une deuxième entrée une commande d'égrenage sélectif. Chaque flux de donnée $12_1$, $12_2$ et $12_3$ sortant respectivement de chaque moyen d'égrenage sélectif $11_1$, $11_2$ et $11_3$ est ensuite dirigé respectivement vers un conduit virtuel déterminé $13_1$, $13_2$ et $13_3$. Les trois conduits virtuels $13_1$, $13_2$ et $13_3$ forment une artère physique 14 de transmission et les différentes artères empruntées par les cellules issues d'un service déterminé forment un circuit virtuel correspondant à un trajet déterminé à travers le réseau entre un abonné émetteur et un abonné récepteur d'un même service.

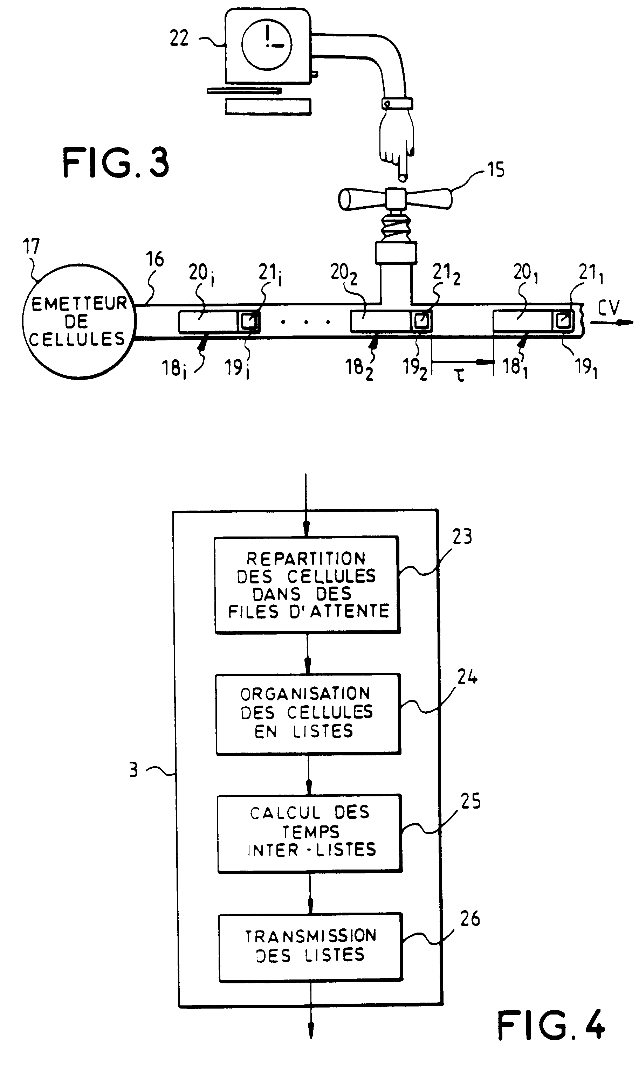

Le principe général de l'égrenage est illustré par le schéma fonctionnel simplifié de la figure 3.

Sur cette figure, l'égrenage est symbolisé par un robinet 15 agissant sur le débit d'un flux de données 16 émis par un émetteur de cellules 17. Le flux de données 16 est segmenté en cellules $18_i$ qui sont acheminées vers un circuit virtuel CV déterminé non représenté, à un rythme dépendant de l'ouverture du robinet 15, symbolisé par une main, gérant ainsi le débit des cellules $18_i$ dans le réseau.

Chaque cellule $18_i$ comporte un en-tête $19_i$ et un champ de donnés $20_i$ . Un champ supplémentaire $21_i$, représenté par un petit carré comportant une information de temps correspondant à un écart intercellulaire déterminé $\tau$, est associé à l'en-tête $19_i$ de chaque cellule $18_i$. Cette information de temps est délivrée par un dispositif de gestion d'informations par exemple un microprocesseur, non représenté sur cette figure, qui gère la répartition des débits utiles alloués à chaque service connecté au réseau. L'information $21_1$, contenue dans l'en-tête $19_1$ d'une première cellule précédente $18_1$ venant d'être émise et correspondant à l'écart intercellulaire entre la première cellule émise $18_1$ et une deuxième cellule $18_2$ suivant la première, est chargée dans une minuterie 22, désignée couramment par sa traduction anglo-saxonne "timer" et qui sera ainsi désignée dans la suite de la description. Après chaque émission, le robinet 15 est fermé durant le temps $\tau$. A l'expiration du temps $\tau$ chargé dans le timer 22, la deuxième cellule $18_2$ suivant la première cellule $18_1$, est alors émise et ainsi de suite jusqu'à épuisement des cellules $18_i$.

Dans le procédé selon l'invention, deux moyens d'égrenage sont mis en oeuvre: le premier moyen d'égrenage, appelé également égrenage global, garantit un écart intercellulaire minimal entre des cellules consécutives quelconques. Il permet de limiter de façon globale le flux de cellules émis par un service déterminé et permet en outre une protection contre un dépassement éventuel de la capacité d'une artère de transmission évitant ainsi des pertes d'informations.

Un deuxième moyen d'égrenage, appelé également égrenage sélectif, contrôle le débit alloué à un abonné, ou service client, déterminé pour qu'il ne puisse pas dépasser le débit qui lui est alloué. A chaque service client est attribué un circuit virtuel déterminé et, comme décrit précédemment, la somme des débits utiles sur un circuit virtuel déterminé doit être au mieux adaptée au débit physique de l'artère de transmission. L'égrenage sélectif permet donc en outre de garantir cette adaptation en imposant à des cellules déterminées empruntant un circuit virtuel déterminé, un écart intercellulaire minimal en fonction de paramètres d'acheminement et d'égrenage sélectif des cellules.

Dans la première étape 1 du procédé selon l'invention les messages livrés par les services clients sont décomposés en cellules ATM.

La deuxième étape 2 consiste dans un premier traitement à associer à l'en-tête de chacune des cellules, issues de la première étape 1, un champ comprenant un écart intercellulaire déterminé pour effectuer l'égrenage global des cellules.

Dans la troisième étape, les cellules issues du premier traitement subissent un deuxième traitement pour effectuer l'égrenage sélectif des cellules. Cette troisième étape 3 se subdivise en quatre étapes illustrées par les étapes 23 à 26 dans le bloc diagramme de la figure 4.

Dans une première étape 23, le deuxième traitement commence par répartir les cellules des messages dans des files d'attente déterminées en fonction de leur débit, il se poursuit dans une deuxième étape 24, en organisant les cellules ainsi réparties sous forme de listes, puis dans une troisième étape 25, il calcule l'écart entre chaque liste appelé ci-après temps entre listes, et se termine dans une quatrième étape 36, en transmettant les listes à la quatrième étape 4 du procédé selon l'invention.

La première étape 23 du deuxième traitement du procédé selon l'invention consiste, dès qu'un message est livré après le premier traitement effectué dans la deuxième étape 2 du procédé selon l'invention, à attribuer à chaque service client une file d'attente correspondant à un débit d'émission déterminé dans un circuit virtuel déterminé.

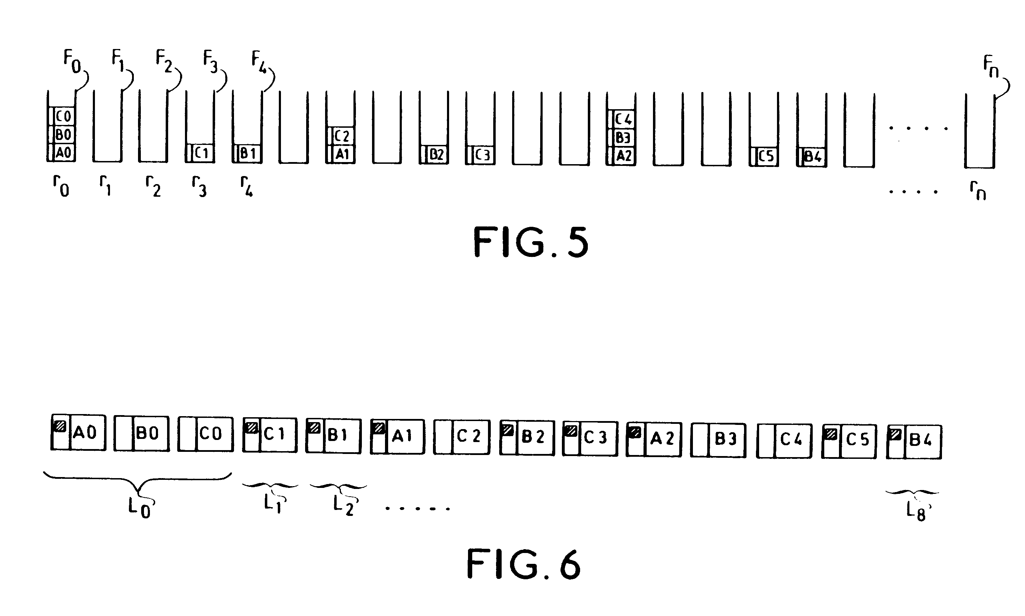

La figure 5 représente un exemple de répartition des cellules, représentées par un rectangle, de trois messages $M_A$, $M_B$, $M_C$ issus respectivement des trois services clients A, B et C introduits précédemment dans l'exemple de la figure 2. Les cellules sont réparties dans des files d'attente $F_0$ à $F_n$ de type FIFO, abréviation anglo-saxonne pour First Input First Output, et sont représentées chacune schématiquement sous la forme d'un réservoir.

Les files d'attente $F_0$ à $F_n$ sont ordonnées en rangs $r_o$ à $r_n$. Le premier message $M_A$ comporte trois cellules $A_0$, $A_1$ et $A_2$, le deuxième message $M_B$ comporte cinq cellules $B_0$, $B_1$, $B_2$, $B_3$ et $B_4$, et le troisième message $M_C$ comporte six cellules $C_0$, $C_1$, $C_2$, $C_3$ $C_4$ et $C_5$. La première file d'attente $F_0$ de rang $r_o$ contient les trois premières cellules $A_0$, $B_0$ et $C_0$ respectives aux trois messages $M_A$, $M_B$ et $M_C$. Les deux files d'attentes suivantes $F_1$ et $F_2$ respectivement de rang $r_1$ à $r_2$ sont vides. La quatrième file d'attente $F_3$ de rang $r_3$ contient une seule cellule $C_1$ appartenant au troisième message $M_C$. La cinquième file d'attente $F_4$ de rang $r_4$ contient une seule cellule $B_1$ appartenant au deuxième message $M_B$ etc...

La deuxième étape 24 du deuxième traitement pour l'égrenage sélectif consiste à organiser sous la forme d'une suite de cellules segmentée en listes, les cellules issues des files d'attentes de l'étape 23.

Chaque liste est une partie de la suite des cellules, correspondant au contenu de chaque file d'attente et dont les cellules sont destinées à être émises séquentiellement. Chaque début de liste est repéré par un indicateur de tête de liste associé à l'en-tête de la première cellule de la liste appelée ci-après cellule tête de liste. Les listes sont émises consécutivement avec comme contrainte que le temps entre listes $T_{il}$, séparant l'émission de deux cellules tête de liste consécutives sur l'artère, est au moins égal à un temps de résolution $T_r$ du procédé d'égrenage lié à l'horloge interne d'un timer d'égrenage sélectif et peut être par exemple de l'ordre de $10^{-6}$s. Un message est éligible si aucun message issu de la même file d'attente n'est déjà réparti dans les listes.

Les files d'attentes sont scrutées en permanence par un organe de gestion d'information, par exemple un microprocesseur, et les cellules des messages éligibles sont chaînées, à raison d'au plus une par liste. Les listes sont espacées d'un écart correspondant à un nombre $N_L$ de listes en fonction du débit associé à la file d'attente correspondante. Le nombre $N_L$ est défini comme le rapport du temps entre listes $T_{il}$ sur le temps de résolution $T_r$.

La figure 6 illustre une suite de cellules segmentée en listes et reprend l'exemple des trois messages $M_A$, $M_B$ et $M_C$ précédents.

La première liste $L_0$ comporte le contenu de la première file d'attente $F_0$, soit dans l'ordre, les cellules $A_0$, $B_0$, $C_0$. La cellule tête de liste $A_0$ comporte associé à son en-tête un indicateur de tête de liste symbolisé par un petit carré hachuré.

La deuxième liste $L_1$ succédant à la première comporte le contenu de la première file d'attente suivante non vide $F_3$ soit une seule cellule $C_1$ qui est également une cellule tête de liste. La troisième liste $L_2$ comporte également une seule cellule $B_1$ et ainsi de suite jusqu'à la dernière liste $L_8$ comportant la dernière cellule $B_4$ du deuxième message $M_B$.

La troisième étape 25 du deuxième traitement pour l'égrenage sélectif consiste à calculer le temps entre listes $T_{il}$ avant l'émission de chaque nouvelle liste.

Périodiquement, par exemple toutes les millisecondes, un nombre déterminé de listes est figé. Chaque liste contient des cellules appartenant à des messages différents. Les listes vides ne sont pas prises en compte pour le calcul. Pour chaque liste figée, un temps entre listes $T_{il}$ est calculé. Ce temps est ensuite pris en compte, dans la quatrième étape 4 du procédé selon l'invention qui consiste à émettre les cellules sur l'artère.

Soit $r_t$ le rang de la file d'attente correspondant à la liste en traitement, $r_s$ celui de la liste non vide suivante, $N_c$ le nombre de cellules dans la liste en traitement, $T_r$ le temps de résolution et $T_g$ l'écart intercellulaire global, le temps entre listes $T_{il}$ s'exprime par la formule suivante :

$$(1) \qquad T_{il} = [T_r \cdot (r_s - r_t)] + [(N_c - 1) \cdot T_g]$$

Dans l'exemple de la figure 5, le rang $r_0$ de la liste en traitement correspondante $L_0$ est égal à 1, le rang $r_3$ de la liste suivante $L_1$ est égal à 4, le nombre de cellules $N_c$ de la liste en traitement $L_0$ est égal à 3.

Le calcul du temps entre listes $T_{il}$ donnée par la formule (1) donne alors le résultat suivant :

$$T_{il} = 3 \cdot T_r + 2 \cdot T_g$$

de même pour la deuxième liste : $T_{il} = T_r$ etc....

Le temps entre listes $T_{il}$ calculé est ensuite inscrit dans un premier champ associé à l'en-tête de la cellule tête de liste.

Dans la quatrième et dernière étape 26 du deuxième traitement les cellules sont transmises successivement à un rythme imposé par la quatrième étape du procédé.

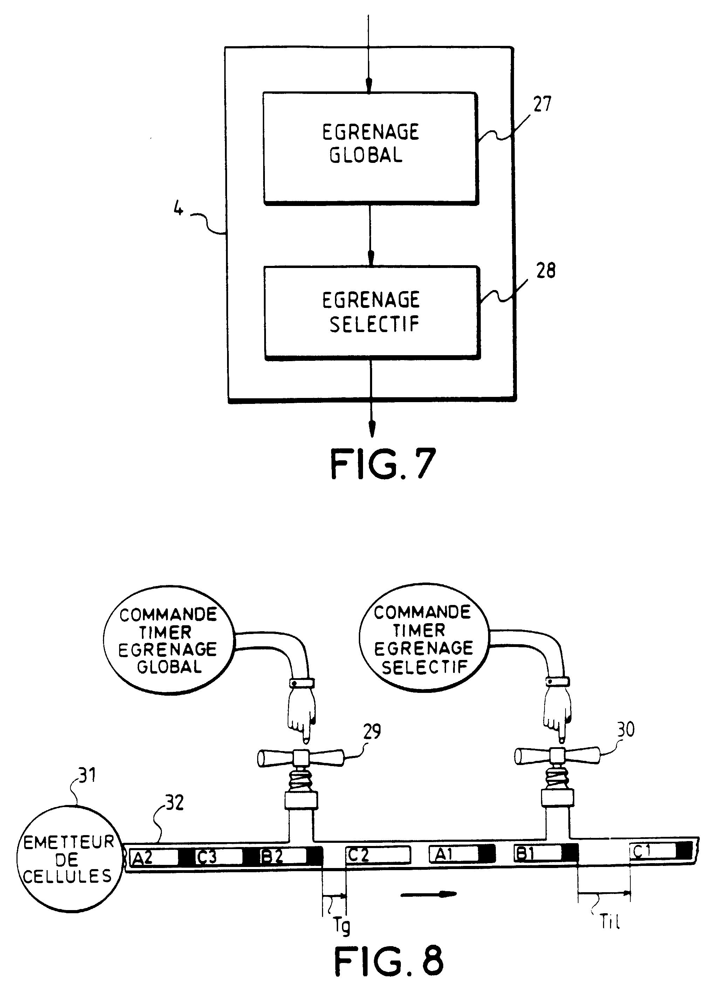

La quatrième et dernière étape 4 du procédé selon l'invention consiste à émettre les cellules sur l'artère à un rythme déterminé en fonction des paramètres d'égrenage global et sélectif acquis dans les étapes précédentes 2 et 3 et inscrits dans des champs associés aux en-têtes de chaque cellule. L'étape 4 se subdivise en une première étape 27 qui assure l'égrenage global et une deuxième étape 28 qui assure l'égrenage sélectif. Ces deux étapes 27 et 28 sont illustrées par le bloc diagramme de la figure 7.

La figure 8 illustre un schéma fonctionnel correspondant à l'étape 4, ou les timers ne sont pas représentés. Seules les commandes des deux égrenages sont représentées symboliquement par une main. Un premier robinet 29 symbolise l'égrenage global et un deuxième robinet 30 l'égrenage sélectif. Un émetteur de cellules 31 émet un flux de données 32 dans le sens indiqué par la flèche. Les cellules représentées par un rectangle restent en attente jusqu'à ce que le premier robinet 29 soit ouvert.

En reprenant l'exemple précédent un premier timer, appelé timer global, est chargé avec le temps intercellulaire global $T_g$ prélevé dans la cellule en traitement $C_2$ précédemment en attente. La cellule suivante $B_2$ est émise à l'expiration du temps intercellulaire global $T_g$ chargé dans le timer. Les cellules suivantes $C_3$ et $A_2$ sont bloquées tant que le temps chargé dans le timer prélevé dans la cellule $B_2$ n'est pas expiré etc... Le processus est renouvelé à chaque nouvelle cellule. Ce premier robinet 29 permet de garantir un temps minimum entre l'émission de chaque cellule consécutive quelconque.

Les cellules ainsi espacées $B_1$, $A_1$ et $C_2$ sont à nouveau bloquées en attente jusqu'à ce que le deuxième robinet 30 symbolisant l'égrenage sélectif soit ouvert.

Quand une cellule tête de liste $C_1$ représentée sur la figure 8 par un petit carré en tête de la cellule est identifiée, le timer appelé timer sélectif est chargé avec le temps entre listes $T_{il}$ prélevé dans la cellule $C_1$. La cellule suivante $B_1$ est bloquée en attente tant que le temps entre listes $T_{il}$ n'est pas expiré. Le processus est renouvelé à chaque nouvelle liste. Ce deuxième robinet 30 permet de garantir un temps déterminé entre deux listes non vides consécutives.

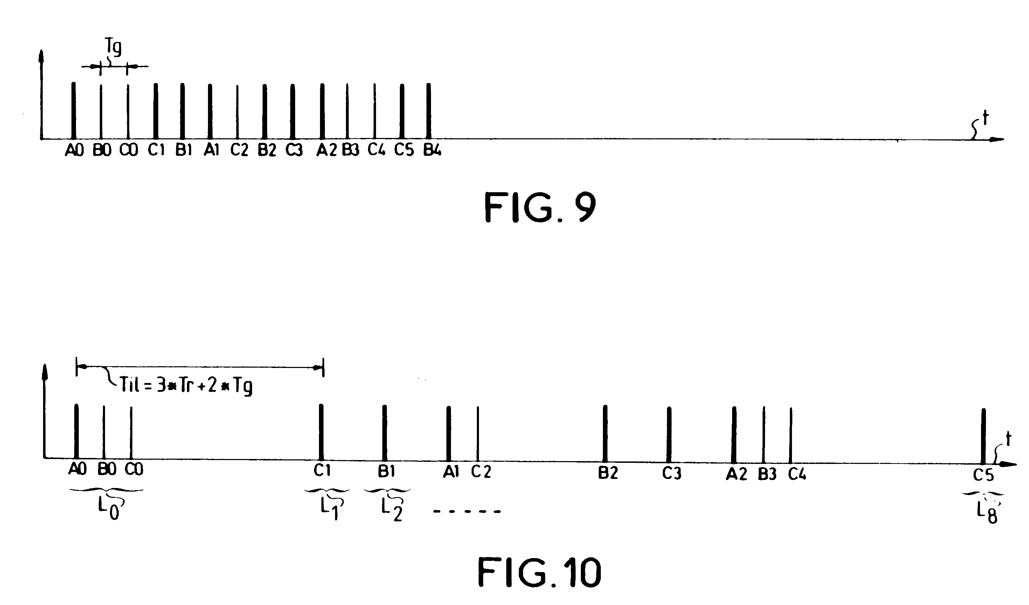

La figure 9 illustre un premier chronogramme représentant l'échelonnement dans le temps de cellules après l'égrenage global.

Chaque cellule est représenté par un trait vertical. Un trait fin correspond à une cellule non tête de liste et un trait épais correspond à une cellule tête de liste.

Ce chronogramme permet de constater l'écart minimal intercellulaire $T_g$ régulier entre chaque cellule $A_0$ à $B_4$.

La figure 10 illustre un deuxième chronogramme représentant les mêmes cellules que dans la figure précédente après l'égrenage sélectif. L'écart minimal intercellulaire $T_g$ est conservé entre cellules d'une même liste, par contre, l'espace entre listes $T_{il}$ imposé entre deux cellules tête de liste varie suivant la formule (1) donnant le calcul du temps entre listes $T_{il}$. Le calcul est effectué avant l'émission de chaque nouvelle liste. Dans l'exemple de la figure 10 le premier temps entre listes $T_{il}$ séparant la première liste $L_0$ de la deuxième liste $L_1$, c'est-à-dire le temps séparant la cellule tête de liste $A_0$ de la première liste $L_0$ et la cellule tête de la liste $C_1$ de la deuxième liste $L_1$, vaut en appliquant la formule (1) :
$T_{il} = 3.T_r + 2.T_g$

Le même calcul est effectué entre les cellules tête de liste $C_1$ et $B_1$, $B_1$ et $A_1$ et ainsi de suite jusqu'entre $A_2$ et $C_5$

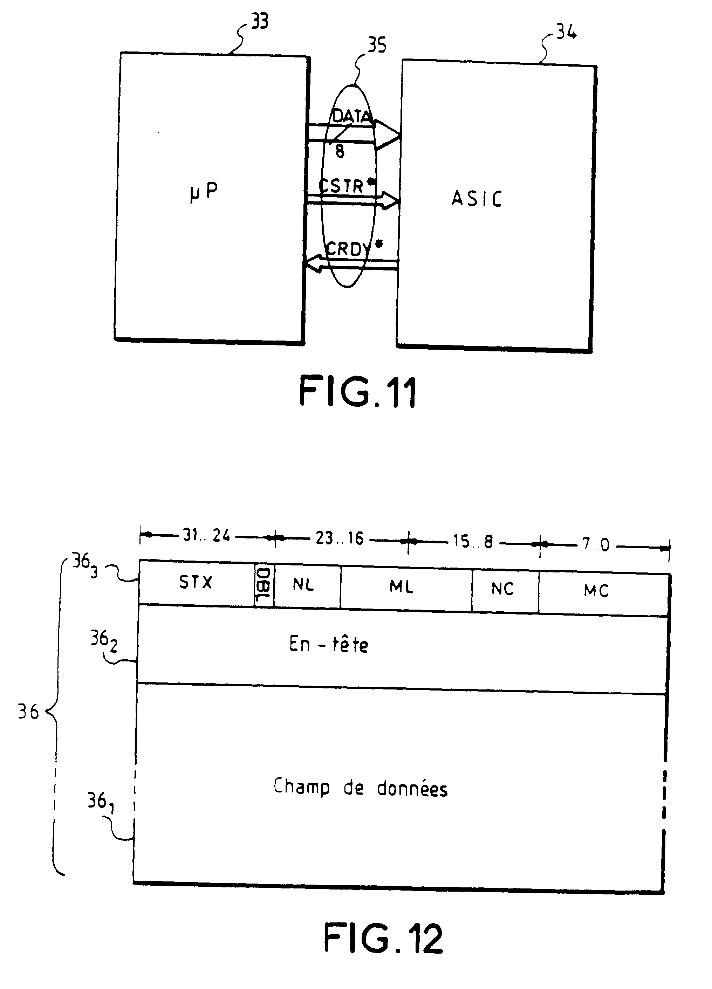

Le schéma fonctionnel d'un mode de réalisation d'un dispositif pour la mise en oeuvre du procédé selon l'invention est illustré par la figure 11.

Dans ce mode de réalisation, le dispositif comporte deux composants principaux. Le premier composant 33 est un dispositif de gestion d'information, par exemple un microprocesseur, et le deuxième composant 34 est un dispositif en logique câblée, par exemple un ASIC abréviation anglo-saxonne pour "Circuit Intégré pour Application Spécifique".

Le microprocesseur 33 prend en charge la segmentation des messages en cellules ATM et dialogue via un lien de communication 35 avec l'ASIC 34 qui intègre l'égrenage global et l'égrenage sélectif ainsi que l'émetteur de cellules ATM 31. Ce lien 35 comporte un bus de données DATA codé sur huit bits permettant de transmettre les cellules, représentées par une suite d'octets, du microprocesseur 33 vers l'ASIC 34. Chaque octet, DATA, émis par le microprocesseur 33 est validé par une impulsion de qualification CSTR* et chaque octet, DATA, reçus par l'ASIC 34 est validé par une impulsion d'acquittement CRDY* les deux impulsions étant asservies l'une sur l'autre.

Pour créer un écart intercellulaire déterminé, l'ASIC 34 ne délivre pas d'impulsion d'acquittement tant que le temps chargé dans le timer n'est pas expiré. La gestion de cet échange est effectuée par exemple par un module de traitement localisé dans l'ASIC 34.

La figure 12 représente un exemple de format d'une cellule 36 échangée entre le microprocesseur 33 et l'ASIC 34.

La cellule 36 comporte un premier niveau $36_1$ correspondant au champ de données et un deuxième niveau $36_2$ correspondant à l'en-tête de la cellule 36. A cet en-tête $36_2$ est associé un mot $36_3$ formant un troisième niveau codé sur 32 bits permettant la transmission de différents paramètres à l'ASIC 34. Chacun de ces paramètres est codé sur un nombre déterminé de bits. Ce mot $36_3$ comporte, du bit de poids le plus faible vers le bit de poids le plus fort, de la droite vers la gauche sur la figure :

- un premier couple de paramètres (NC, MC) relatifs aux paramètres chargés dans le premier timer pour effectuer l'égrenage global, codé sur douze bits,

- un deuxième couple de paramètres (NL, ML) relatifs aux paramètres chargés dans le deuxième timer pour effectuer l'égrenage sélectif, codé sur douze bits, et

- un indicateur de tête de liste (DBL), et un mot de synchronisation signalant le début d'une cellule (STX), le tout codé sur les huit derniers bits du mot $36_3$ formant le troisième niveau.

Le temps de chargement d'un timer, ou délai timer, est calculé par la formule suivante :

$$(2) \qquad DELAI = 2^{Nx}.Mx.T_b$$

avec 0<Nx<15 et 0<Mx<255
et où $T_b$ correspond à la période de l'horloge interne du timer.

Les grandeurs Nx et Mx correspondent aux couples (NC, MC) et (NL, ML) quand x prend respectivement la valeur C ou L.

Cette formule (2) correspond à une combinaison d'un produit simple $Mx.T_b$ et d'une fonction exponentielle de base $2, 2^{Nx}$, et permet de réduire le nombre de bits codant les paramètres Nx et Mx tout en conservant une grande dynamique sur le temps chargé dans le timer.

A titre d'exemple, le temps maximal $DELAI_{max}$ de chargement d'un timer est pour une période d'horloge interne du timer de $T_b = 100$ ns, soit pour Nx = 15 et Mx = 255 :

$$DELAI_{max} = 2^{15}.255.10^{-7}s \text{ soit } DELAI_{max} = 0,835 \text{ s}$$

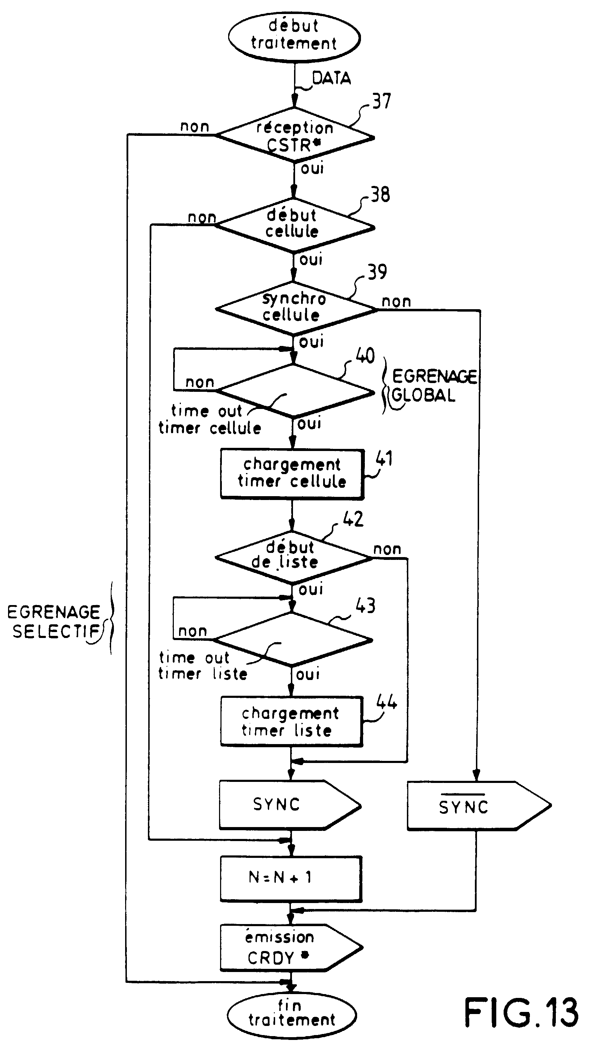

La figure 13 illustre un organigramme du traitement effectué par l'ASIC 34.

Le traitement débute en effectuant un premier test 37 qui consiste à détecter la présence d'une impulsion de qualification CSTR* d'envoi d'un octet DATA par le microprocesseur 33. Si le résultat du premier test 37 est négatif le traitement s'arrête, si le résultat est positif le traitement se poursuit par un deuxième test 38 consistant à détecter un début de cellule 36 : le début d'une cellule 36 est défini par le mot $36_3$ de 32 bits contenant les divers paramètres associés à l'en-tête $36_2$ de la cellule 36. A chaque cellule 36 donc à chaque mot $36_3$ de 32 bits est associé un numéro d'ordre. Le premier mot de la première cellule 36 émise est numéroté "0". L'ASIC 34 comporte un compteur, non représenté, initialisé à 0 qui reconnaît le premier début de cellule 36 si le mot rencontré $36_3$ est bien numéroté "0" permettant la suite du traitement, sinon le compteur de l'ASIC 34 est incrémenté, N = N+1, et il génère vers le microprocesseur 33 une impulsion d'acquittement CRDY* permettant l'envoi d'un nouvel octet DATA. Si le résultat du deuxième test 38 est positif le traitement se poursuit par un troisième test 39 qui consiste à détecter si le mot de synchronisation STX signalant un début de cellule 36 est bien positionné. Si le résultat du troisième test 39 est négatif, un indicateur de non synchronisation $\overline{SYNC}$ est déclenché et l'ASIC 34 transmet vers le microprocesseur 33 une impulsion d'acquittement CRDY* pour le traitement d'un nouvel octet DATA sans incrémenter le compteur de l'ASIC 34. Si le résultat est positif le traitement se poursuit par un quatrième test 40 qui consiste à contrôler si le temps chargé dans le timer d'égrenage global, est expiré. Le quatrième test 40 est répété tant que le temps n'est pas expiré. Une fois le temps expiré, le traitement autorise le chargement 41 d'un nouveau temps, porté par une nouvelle cellule 36, dans le timer d'égrenage global. Ce test 40 correspond à l'égrenage global symbolisé par le premier robinet 29 représenté sur la figure 8.

Le traitement se poursuit par un cinquième test 42 qui consiste à détecter la présence d'un indicateur de début de liste DBL dans la cellule 36. Si le résultat est négatif, un indicateur de synchronisation SYNC est activé et le compteur de l'ASIC 34 est incrémenté, N = N+1, avant l'émission CRDY* d'un nouvel octet DATA. Si le résultat est positif c'est-à-dire si un indicateur de tête de liste DBL est détecté, le traitement se poursuit par un sixième test 43. Si le résultat du sixième test 43 est négatif, le test 43 est réitéré jusqu'à ce que le temps chargé dans le timer utilisé pour l'égrenage sélectif soit expiré. Ce test 43 correspond à l'égrenage sélectif symbolisé par le deuxième robinet 30 représenté sur la figure 8. Si le résultat est positif un nouveau temps entre listes $T_{il}$ est chargé à l'étape 44 dans le deuxième timer, ou timer d'égrenage sélectif, et l'indicateur de synchronisation SYNC permet de contrôler la synchronisation des cellules dans le flux des octets DATA sur le lien de communication 35. Le traitement se poursuit ensuite par l'incrémentation, N = N + 1, du compteur de l'ASIC 34 et un nouvel octet DATA est transmis du microprocesseur 33 vers l'ASIC 34. Le traitement se répète jusqu'à épuisement des cellules 36 constituant les messages.

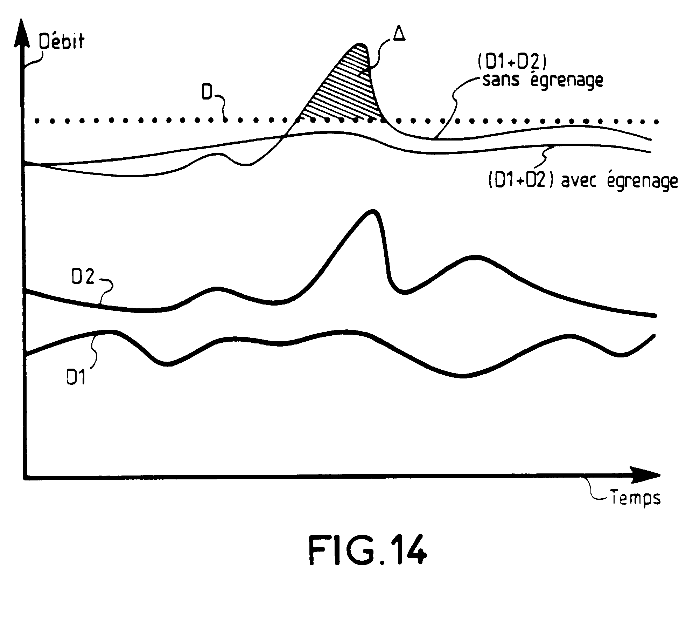

La figure 14 illustre un diagramme représentant un exemple d'évolution du débit d'une artère, porté en ordonnée, en fonction du temps, qui est porté en abscisse.

Dans cet exemple deux services clients $S_1$ et $S_2$ sont multiplexés sur la même artère avec respectivement deux débits différents $D_1$ et $D_2$ avec $D_2 > D_1$. Un seuil de débit physique maximal D admis par l'artère est symbolisé par une ligne horizontale en trait interrompu. La courbe représentant la somme des deux débits, $D_1 + D_2$, sans égrenage dépasse ce seuil au moment ou une pointe de débit du service $S_2$ apparaît. L'aire $\Delta$ du dépassement est hachurée.

Le procédé selon l'invention permet de ramener la somme des deux débits $D_1$ et $D_2$ sans égrenage sous le seuil du débit physique maximal D admis par l'artère. Une nouvelle courbe $D_1 + D_2$ avec égrenage correspond à un lissage de la courbe précédente.

## Revendications

1. Procédé de gestion du débit de messages codés numériquement transportés par un réseau asynchrone entre au moins un abonné émetteur et un abonné récepteur, consistant, dans une première étape (1), à segmenter les messages émis par l'abonné émetteur en cellules, dans une deuxième étape (2), à effectuer un premier traitement sur chacune des cellules pour permettre de les espacer régulièrement d'un écart de temps minimal ($T_g$) au moins égal à un temps de résolution ($T_r$) déterminé, dans une troisième étape (3), à effectuer un deuxième traitement succédant au premier, pour permettre d'espacer des groupes de cellules ayant le même débit d'un écart de temps minimal ($T_{il}$) déterminé en fonction du débit alloué à chaque abonné du réseau, et dans une quatrième étape (4), à émettre les cellules ainsi espacées dans un circuit virtuel (CV) déterminé du réseau, caractérisé en ce que dans la deuxième étape (2) le premier traitement des cellules (36) consiste à associer à l'en-tête ($36_2$) de chaque cellule (36) un premier champ contenant une information de temps (NC, MC) correspondant à l'écart minimal ($T_g$) imposé entre deux cellules (36) quelconques consécutives émises dans le réseau, en ce que dans la troisième étape (3), le deuxième traitement des cellules (36) consiste, après avoir attribué à chaque abonné une file d'attente ($F_o$ à $F_n$) correspondant à un débit d'émission déterminé dans le circuit virtuel (CV) déterminé, à répartir (23) les cellules (36) issues du premier traitement dans les files d'attente ($F_o$ à $F_n$) en fonction du débit déterminé alloué à chaque cellule (36), à organiser (24) des groupes de cellules (36) issues des files d'attente ($F_o$ à $F_n$) en une suite de cellules (36) segmentée en listes ($L_0$ à $L_8$), chaque liste ($L_0$ à $L_8$) comportant le contenu d'une file d'attente ($F_o$ à $F_n$) non vide et chaque début de liste ($L_0$ à $L_8$) étant repéré par un indicateur (DBL) de têtes de liste associé à l'en-tête ($36_2$) de la cellule (36) tête de liste, à calculer (25) un écart de temps déterminé ($T_{il}$) séparant l'émission de deux cellules (36) tête de liste consécutives en fonction du temps de résolution ($T_r$), du rang ($r_t$) de la liste ($L_0$ à $L_8$) en traitement, du rang ($r_s$) de la liste ($L_0$ à $L_8$) non vide suivante, du nombre de cellules (36) dans la liste ($L_0$ à $L_8$) en traitement et de l'écart de temps ($T_g$) entre deux cellules (36) consécutives quelconques, à transmettre (26) séquentiellement les listes ($L_0$ à $L_8$) de cellules (36) à un émetteur de cellules (17 ; 31) du réseau, et en ce qu'il consiste dans la quatrième étape (4), à charger dans un premier timer (29) du réseau l'écart de temps ($T_g$) séparant l'émission de deux cellules (36) quelconques consécutives associé à l'en-tête ($36_2$) de chaque cellule (36) pour effectuer un égrenage global (27) des cellules (36), à charger dans un deuxième timer (30) succédant au premier l'écart de temps ($T_{il}$) séparant l'émission de deux cellules (36) têtes de liste consécutives pour effectuer un égrenage sélectif (28) des cellules (36), et à émettre dans le circuit virtuel (CV) déterminé du réseau un flux (16 ; 32) de cellules (36) issues des deux égrenages successifs (27 et 28).

2. Dispositif pour la mise en oeuvre du procédé selon la revendication 1, caractérisé en ce qu'il comporte un premier moyen ($7_1$ à $7_3$) pour segmenter les messages en cellules (36), un deuxième moyen (9), appelé moyen d'égrenage global, pour imposer un écart de temps ($T_g$) déterminé entre deux cellules (36) quelconques consécutives, un troisième moyen ($11_1$ à $11_3$), appelé moyen d'égrenage sélectif, pour imposer un écart de temps ($T_{il}$) déterminé entre deux listes ($L_0$ à $L_8$) consécutives et, un quatrième moyen pour émettre les cellules (36) dans un circuit virtuel (CV) déterminé du réseau à un rythme imposé par le deuxième moyen (9) et le troisième moyen ($11_1$ à $11_3$).

3. Dispositif selon la revendication 2, caractérisé en ce que le deuxième moyen (9) comporte un premier timer (29) chargé d'un temps d'égrenage global ($T_g$) associé à l'en-tête ($36_2$) de chaque cellule (36), en ce que le troisième moyen ($11_1$ à $11_3$) comporte un deuxième timer (30) chargé d'un temps d'égrenage sélectif ($T_{il}$) calculé à partir des d'informations associées à l'en-tête ($36_2$) de chaque cellule (36) têtes de liste, et en ce que le quatrième moyen comporte un émetteur de cellules (17 ; 31) qui émet un flux (16 ; 32) de cellules (36) séquentiellement dans le réseau en amont du premier timer (29) et un dispositif (33) de gestion des informations contenues dans chaque cellule (36) pour commander le premier timer (29) et le deuxième timer (30) en fonction d'une durée inscrite dans chaque cellule (36).

4. Dispositif selon l'une quelconque des revendications 2 et 3, caractérisé en ce que le premier moyen ($7_1$ à $7_3$) de segmentation des messages est intégré dans le dispositif (33) de gestion des informations du quatrième moyen, et en ce que le deuxième moyen (9), le troisième moyen ($11_1$ à $11_3$) et l'émetteur de cellules (17 ; 31) du quatrième moyen sont intégrés dans un dispositif en logique câblée (34).

5. Dispositif selon la revendication 4, caractérisé en ce que le dispositif de gestion d'information (33) est un microprocesseur et en ce que le dispositif en logique câblée (34) est un ASIC, les deux dispositifs (33 et 34) dialoguant entre eux, via un lien de communication (35) comportant un bus de données (DATA), un bus de validation d'émission de données (CSTR*) par le microprocesseur (33) et un bus de validation de réception (CRDY*) par l'ASIC (34).

**Patentansprüche**

1. Verfahren zur Steuerung des Durchsatzes von digital kodierten Nachrichten auf einem asynchronen Netz zwischen mindestens einem sendenden und einem empfangenden Teilnehmer, das darin besteht, in einem ersten Schritt (1) die vom sendenden Teilnehmer kommenden Nachrichten in Zellen zu zerteilen, in einem zweiten Verfahrensschritt (2) eine erste Verarbeitung jeder der Zellen durchzuführen, um ihnen einen regelmäßigen Abstand gemäß einer Mindestzeit ($T_g$) zu verleihen, die mindesten einer bestimmten Auflösungszeit ($T_r$) entspricht, in einem dritten Verfahrensschritt (3) eine auf die erste Verarbeitung folgende zweite Verarbeitung vorzunehmen, um Gruppen von Zellen mit einem gleichen Durchsatz einen abhängig von jedem Teilnehmer des Netzes zugewiesenen Durchsatz bestimmten Mindestabstand ($T_{il}$) zu verleihen, und in einem vierten Verfahrensschritt (4) die so mit Abständen versehenen Zellen in einen bestimmten virtuellen Schaltkreis (CV) des Netzes auszusenden, dadurch gekennzeichnet, daß im zweiten Verfahrensschritt (2) die erste Verarbeitung der Zellen (36) darin besteht, dem Vorspann ($36_2$) jeder Zelle (36) ein erstes Feld zuzuordnen, das eine Information über die Zeit (NC, MC) entsprechend dem zwischen zwei beliebigen im Netz ausgesendeten aufeinanderfolgenden Zelle (36) vorgegebenen Mindestabstand ($T_g$) enthält, daß im dritten Verfahrensschritt (3) die zweite Verarbeitung der Zellen (36) darin besteht, nachdem jedem Teilnehmer ein Warteschlange ($F_0$ bis $F_n$) entsprechend einem bestimmten Sendedurchsatz in dem gegebenen virtuellen Schaltkreis (CV) zugewiesen wurde, die aus der ersten Verarbeitung hervorgehenden Zellen (36) in die Warteschlangen ($F_0$ bis $F_n$) abhängig von dem jeder Zelle (36) zugewiesenen bestimmten Durchsatz zu verteilen (23), Gruppen von aus den Warteschlangen ($F_0$ bis $F_n$) kommenden Zellen (36) in eine in Listen ($L_0$ bis $L_8$) unterteilte Folge von Zellen zu organisieren (24), wobei jede Liste ($L_0$ bis $L_8$) den Inhalt einer nicht-leeren Warteschlange ($F_0$ bis $F_n$) enthält und jeder Anfang einer Liste ($L_0$ bis $L_8$) durch einen Listenanfangsindikator (DBL) markiert wird, der dem Vorspann ($36_2$) der Listenanfangszelle 36 zugeordnet ist, einen bestimmten zeitlichen Mindestabstand ($T_{il}$) zwischen der Aussendung von zwei aufeinanderfolgenden Listenanfangszellen (36) abhängig von der Auflösungszeit ($T_r$), vom Rang ($r_t$) der gerade verarbeiteten Liste ($L_0$ bis $L_8$), vom Rang ($r_s$) der nächstfolgenden nicht-leeren Liste ($L_0$ bis $L_8$), von der Anzahl von Zellen (36) in der gerade verarbeiteten Liste ($L_0$ bis $L_8$) und dem zeitlichen Abstand ($T_g$) zwischen zwei beliebigen aufeinanderfolgenden Zellen (36) zu berechnen (25), die Listen ($L_0$ bis $L_8$) von Zellen (36) an einen Sender (17; 31) für Zellen des Netzes zu übertragen (26), und daß es in einem vierten Verfahrensschritt (4) darin besteht, in einen ersten Timer (29) des Netzes den dem Vorspann ($36_2$) jeder Zelle (36) zugeordneten zeitlichen Abstand ($T_g$) zwischen der Aussendung zweier beliebiger aufeinanderfolgender Zellen (36) zu laden, um eine globale Spreizung (27) der Zellen (36) durchzuführen, in einen zweiten Timer (30) hinter dem ersten den zeitlichen Abstand ($T_{il}$) zwischen der Aussendung zweier aufeinanderfolgender Listenanfangszellen (36) zu laden, um eine selektive Spreizung (28) der Zellen (36) zu bewirken, und in den bestimmten virtuellen Schaltkreis (CV) des Netzes einen Fluß (16; 32) von Zellen (36) auszusenden, die sich nach den beiden aufeinanderfolgenden Spreizungen (27 und 28) ergeben.

2. Vorrichtung zur Durchführung des Verfahrens nach Anspruch 1, dadurch gekennzeichnet, daß sie ein erstes Mittel ($7_1$ bis $7_3$) zur Zerteilung der Nachrichten in Zellen (36), ein zweites Mittel (9) zur globalen Spreizung, um einen vorgegebenen zeitlichen Abstand ($T_g$) zwischen zwei beliebigen aufeinanderfolgenden Zellen (36) zu bilden, ein drittes Mittel ($11_l$ bis $11_3$) zur selektiven Spreizung, um einen vorbestimmten zeitlichen Abstand ($T_{il}$) zwischen zwei aufeinanderfolgende Listen ($L_0$ bis $L_8$) zu bilden, und ein viertes Mittel aufweist, um die Zellen (36) in einen bestimmten virtuellen Schaltkreis (CV) des Netzes in einem durch das zweite Mittel (9) und das dritte Mittel ($11_1$ bis $11_3$) gegebenen Rhythmus auszusenden.

3. Vorrichtung nach Anspruch 2, dadurch gekennzeichnet, daß das zweite Mittel (9) einen ersten Timer (29) enthält, in den eine dem Vorspann ($36_2$) jeder Zelle zugeordnete erste globale Spreizungszeit ($T_g$) geladen wird, daß das dritte Mittel ($11_1$ bis $11_3$) einen zweiten Timer (30) enthält, in den eine ausgehend von dem Vorspann ($36_2$) jeder Listenanfangszelle (36) zugeordneten Informationen berechnete selektive Spreizungszeit ($T_{il}$) geladen wird, und daß das vierte Mittel ein Sendeorgan (17; 31) für Zellen, das einen Fluß (16; 32) von Zellen (36) in das Netz vor dem ersten Timer (29) sendet, sowie eine Vorrichtung (33) zur Verarbeitung der in jeder Zelle (36) enthaltenen Informationen enthält, um den ersten Timer (29) und den zweiten Timer (30) abhängig von einer in jede Zelle (36) eingetragenen Dauer zu steuern.

4. Vorrichtung nach einem beliebigen der Ansprüche 2 und 3, dadurch gekennzeichnet, daß das erste Mittel ($7_1$ bis $7_3$) zur Zerteilung der Nachrichten in die Vorrichtung (33) zur Verarbeitung der Informationen des vierten Mittels integriert ist und daß das zweite Mittel (9), das dritte Mittel ($11_1$ bis $11_3$) und das Sendeorgan (17; 31) für Zellen des vierten Mittel in eine Vorrichtung (34) mit verdrahteter Logik integriert sind.

5. Vorrichtung nach Anspruch 4, dadurch gekennzeichnet, daß die Vorrichtung zur Informationsverarbeitung (33) ein Mikroprozessor ist und daß die Vorrichtung (34) mit verdrahteter Logik ein ASIC ist, wobei diese beiden Vorrichtungen (33, 34) untereinander Informationen über eine Verbindung (35) austauschen, die einen Datenbus (DATA), einen Freigabebus (CSTR*) für die Aussendung von Daten durch den Mikroprozessor (33) und einen Freigabebus (CRDY*) für den Empfang durch den ASIC (34) enthält.

**Claims**

1. Method of managing the throughput of digitally coded messages transported by an asynchronous network between at least one sending subscriber and one receiving subscriber, consisting, in a first step (1) in segmenting the messages sent by the sending subscriber into cells, in a second step (2), in performing a first processing on each of the cells so as to enable them to be regularly spaced by a minimum time gap ($T_g$) at least equal to a specified resolution time ($T_r$), in a third step (3), in performing a second processing following the first, so as to enable groups of cells having the same throughput to be spaced apart by a minimum time gap ($T_{il}$) specified as a function of the throughput allotted to each subscriber of the network, and in a fourth step (4), in sending the cells thus spaced apart through a specified virtual circuit (CV) of the network, characterized in that in the second step (2) the first processing of the cells (36) consists in associating with the header ($36_2$) of each cell (36) a first field containing a time cue (NC, MC) corresponding to the minimum gap ($T_g$) imposed between any two consecutive cells (36) sent through the network, in that in the third step (3), the second processing of the cells (36) consists, after having allocated each subscriber a queue ($F_0$ to $F_n$) corresponding to a specified transmission throughput in the specified virtual circuit (CV), in distributing (23) the cells (36) emanating from the first processing within the queues ($F_o$ to $F_n$) as a function of the specified throughput allotted to each cell (36), in organizing (24) groups of cells (36) emanating from the queues ($F_o$ to $F_n$) into a string of cells (36) segmented into lists ($L_0$ to $L_8$), each list ($L_0$ to $L_8$) comprising the contents of a non-empty queue ($F_o$ to $F_n$) and each start of list ($L_0$ to $L_8$) being labelled by a head-of-list indicator (DBL) associated with the header ($36_2$) of the head-of-list cell (36), in calculating (25) a specified time gap ($T_{il}$) separating the sending of two consecutive head-of-list cells (36) as a function of the resolution time ($T_r$),

of the rank ($r_t$) of the list ($L_0$ to $L_8$) being processed, of the rank ($r_s$) of the next non-empty list ($L_0$ to $L_8$), of the number of cells (36) in the list ($L_0$ to $L_8$) being processed and of the time gap ($T_g$) between any two consecutive cells (36), in sequentially transmitting (26) the lists ($L_0$ to $L_8$) of cells (36) to a sender of cells (17; 31) of the network, and in that it consists in the fourth step (4), in loading into a first timer (29) of the network the time gap ($T_g$) which separates the sending of any two consecutive cells (36) and is associated with the header ($36_2$) of each cell (36) so as to perform a global segregating (27) of the cells (36), in loading into a second timer (30) following the first the time gap ($T_{il}$) separating the sending of two consecutive head-of-list cells (36) so as to perform a selective segregating (28) of the cells (36), and in sending through the specified virtual circuit (CV) of the network a flow (16; 32) of cells (36) emanating from the two successive segregatings (27 and 28).

2. Device for implementing the method according to Claim 1, characterized in that it comprises a first means ($7_1$ to $7_3$) for segmenting the messages into cells (36), a second means (9), referred to as the global segregating means, for imposing a specified time gap ($T_g$) between any two consecutive cells (36), a third means ($11_1$ to $11_3$), referred to as the selected segregating means, for imposing a specified time gap ($T_{il}$) between two consecutive lists ($L_0$ to $L_8$) and, a fourth means for sending the cells (36) through a specified virtual circuit (CV) of the network at a rate imposed by the second means (9) and the third means ($11_1$ to $11_3$).

3. Device according to Claim 2, characterized in that the second means (9) comprises a first timer (29) loaded with a global segregating time ($T_g$) associated with the header ($36_2$) of each cell (36), in that the third means ($11_1$ to $11_3$) comprises a second timer (30) loaded with a selective segregating time ($T_{il}$) calculated from the information associated with the header ($36_2$) of each head-of-list cell (36), and in that the fourth means comprises a sender of cells (17; 31) which sends a flow (16; 32) of cells (36) sequentially through the network upstream of the first timer (29), and a device (33) for managing the information contained in each cell (36) so as to control the first timer (29) and the second timer (30) as a function of a duration written in each cell (36).

4. Device according to either one of Claims 2 and 3, characterized in that the first means ($7_1$ to $7_3$) for segmenting the messages is incorporated within the information management device (33) of the fourth means, and in that the second means (9), the third means ($11_1$ to $11_3$) and the sender of cells (17; 31) of the fourth means are incorporated into a hard-wired logic device (34).

5. Device according to Claim 4, characterized in that the information management device (33) is a microprocessor and in that the hard-wired logic device (34) is an ASIC, the two devices (33) and (34) dialoguing with one another, via a communication link (35) comprising a databus (DATA), a bus for validating the sending of data (CSTR*) by the microprocessor (33) and a bus for validating reception (CRDY*) by the ASIC (34).

SERVICES CLIENTS

1 — SEGMENTATION DES MESSAGES

2 — TRAITEMENT DES CELLULES POUR EGRENAGE GLOBAL

3 — TRAITEMENT DES CELLULES POUR EGRENAGE SELECTIF

4 — EMISSION ET ESPACEMENT DES CELLULES

ARTERE

**FIG.1**

**FIG.2**

Commande Egrenage global

Commande Egrenage sélectif

Service A

Service B

Service C

Segmentation en cellules

Segmentation en cellules

Circuits virtuels

FIG. 3

REPARTITION
DES CELLULES
DANS DES
FILES D'ATTENTE — 23

ORGANISATION
DES CELLULES
EN LISTES — 24

CALCUL DES
TEMPS
INTER - LISTES — 25

TRANSMISSION
DES LISTES — 26

FIG. 4

$F_0$ $F_1$ $F_2$ $F_3$ $F_4$ $F_n$

$r_0$ $r_1$ $r_2$ $r_3$ $r_4$ $r_n$

# FIG.5

$L_0$ $L_1$ $L_2$ $\ldots$ $L_8$

# FIG.6

EGRENAGE GLOBAL 27

EGRENAGE SELECTIF 28

4

## FIG. 7

COMMANDE TIMER EGRENAGE GLOBAL

COMMANDE TIMER EGRENAGE SELECTIF

29

30

31

32

EMETTEUR DE CELLULES

A2 | C3 | B2 | C2 | A1 | B1 | C1

Tg

Til

## FIG. 8

EP 0 609 114 B1

Tg

A0 B0 C0 C1 B1 A1 C2 B2 C3 A2 B3 C4 C5 B4

t

## FIG. 9

Til = 3*Tr + 2*Tg

A0 B0 C0    C1    B1    A1 C2        B2    C3    A2 B3 C4                C5

$\underbrace{\qquad}_{L_0}$    $\underbrace{\qquad}_{L_1}$  $\underbrace{\qquad}_{L_2}$   - - - - -    $\underbrace{\qquad}_{L_8}$

t

## FIG.10

## FIG.11

## FIG.12

FIG.13

FIG.14